# EUROPEAN PATENT APPLICATION

(11) **EP 3 681 011 A1**
(43) Date of publication of application: **15.07.2020**
(21) Application number: 19151385.2
(22) Date of filing: 11.01.2019
(51) Int. Cl.: H02J 50/50, H02J 50/70, H02J 7/00

(54) **INDUCTIVE CHARGER FOR A PERSONAL MOBILE ELECTRONIC DEVICE**

(71) Applicant: Smart Things Solutions GmbH, 81249 München (DE); TQ Systems Shanghai Co., Ltd, Shanghai 201806 (CN)
(72) Inventor: Detemple, Thomas, 82131 Stockdorf (DE); Lachmayer, Bernd, 85658 Egmating (DE)
(74) Representative: Wittmann, Günther

(57) **Abstract**

The present invention discloses an inductive charger set for charging a mobile electronic device, comprising:
- at least one coil accommodated in a coil housing, wherein the coil housing emits a magnetic field; and
- a magnetic guide element spaced apart from the coil housing, wherein the magnetic guide element is arranged between the coil housing and the mobile electronic device and wherein the magnetic guide element directs the magnetic field to the mobile electronic device;
- wherein the coil housing comprises first attachment means for fixing the coil housing on a first side of a furniture element; and
- wherein the magnetic guide element comprises second attachment means for fixing the magnetic guide element on a second side of the furniture element, wherein the first side is opposite to the second side.

## Description

The present invention relates to an inductive charger for a personal mobile electronic device, such as a cell phone, a smart watch, a tablet computer or the like.

### Related Art

Inductive chargers for personal mobile electronic devices are known, such as for electronic tooth brushes, smart watches and increasingly for cellular phones, such as smart phones. The inductive charger generally comprises a recharging device placed on a shelf, sink, bedside table, bar tables, tables in public areas or the like. The recharging devices of the prior art suffer the disadvantage that they are generally connected to a visible cable, which is inconvenient and optically not attractive for a user.

It is also known to place an inductive charger underneath a table, bar table, bedside table or the like. Since the inductive charger has a limited range of operation, the thickness of the furniture at the location, where the recharging device is installed has to be reduced in order to ensure that the mobile electronic device is located within the operation range of the recharging device. In many cases a through hole has to be machined into the furniture at the location, on which the personal electronic device shall be recharged for installing the recharging device.

Such machining of a through hole is undesired by a user, since it might damage valuable furniture and it is time-consuming to machine and requires tools. Further, the prior art inductive charger cannot be repositioned, since the furniture is destroyed by the through hole.

### Summary of the Invention

It is an object of the present invention to provide an inductive charger that may be integrated into furniture without actually modifying the furniture mechanically.

The object of the present invention is achieved by an inductive charger set according to claim 1 and a method according to claim 12. The depending claims relate to preferred embodiments.

An inductive charger set according to the present invention for charging a personal mobile electronic device comprises at least one coil accommodated in a coil housing, wherein the coil housing emits a magnetic field generated by the at least one coil. The inductive charger set further comprises a magnetic guide element spaced apart from the coil housing. The magnetic guide element is located outside the coil housing. The magnetic guide element is arranged between the coil housing and the mobile electronic device to be charged. The magnetic guide element directs the magnetic field generated by the at least one coil to the mobile electronic device, particularly to a recharging coil located in the mobile electronic device. The coil housing comprises first attachment means for fixing the coil housing on a first side of the furniture element. The magnetic guide element comprises second attachment means for fixing the magnetic guide element on a second side of the furniture element, wherein the first side of the furniture element is opposite to the second side of the furniture element. The first side may be underneath a board of a furniture, such as a table, a bar table, a bedside table. The second side can be above a board of the furniture.

The magnetic guide element ensures that an appropriate magnetic flux emitted from the at least one coil in the coil housing is directed to the charging coil of the mobile electronic device, although the mobile electronic device is spaced apart from the at least one coil by the furniture element.

The present invention has the advantage, that no through hole, blind hole or the like must be machined into furniture, such as at the non-visible side of a table, board, bar table or the like.

In one embodiment the magnetic guide element may be generally donut shaped and comprises an opening. The magnetic field is directed by the generally donut shaped magnetic guide element to the mobile electronic device to be charged by the portion around the opening of the generally donut shaped magnetic guide element.

In one embodiment the magnetic guide element may be generally rectangular shaped and comprise an opening in the middle portion. The magnetic field emitted by the at least one coil accommodated in the coil housing is directed to the mobile electronic device to be charged by the portion around the opening.

In one embodiment the magnetic guide element may have a generally arbitrary shaped and comprise an opening in the middle portion.

The magnetic field emitted by the at least one coil accommodated in the coil housing is directed to the mobile electronic device to be charged by the portion around the opening.

In the embodiments described above the opening may be circular, rectangular or comprise any arbitrary shape independent of the shape of the perimeter of the magnetic guide element.

The at least one coil accommodated in the coil housing defines a first surface covered by the at least one coil. The central axis of the at least one coil impinges perpendicular on the first surface. The first surface is congruent to a second surface defined by the portion of the magnetic guide element located around the opening. The inventors assume without wishing to be bound to a specific theory that the magnetic flux emitted by the at least one coil accommodated in the coil housing is directed by the portion around the opening of the magnetic guide element to the mobile electronic device, particularly to the charger coil of the mobile electronic device.

The second surface may be larger than the first surface. The central axis of the at least one coil may extend in axial direction of the coil. A central axis of the magnetic guide element may be congruent to the central axis of the at least one coil.

The magnetic guide element may comprise ferrite. Particularly the magnetic guide element may comprise a ring and/or donut of ferrite.

In one embodiment the magnetic guide element may comprise a magnetic soft ferrite. Preferably, the magnetic soft ferrite comprises Mn and Zn.

Ferrite are known to the person skilled in the art. Ferrite is generally a ceramic material comprising essentially FeₓO_{y}, particularly Fe₂O₃. Small proportions of metallic elements such Mn and Zn may be added to the FeₓO_{y} in order to adjust the magnetic properties.

The first attachment means and/or the second attachment means may a comprise an adhesive film. Thereby, the coil housing may be adhered or glued to a nonvisible side of a furniture or board, and the magnetic guide element may be adhered or glued to the visible side of a furniture or board. Thereby, the inductive charger set may be temporarily or permanently fixed to furniture, without actually damaging the furniture or machining the furniture.

The magnetic guide element may be accommodated in a guide housing and the second attachment means is arranged on the guide housing. The second attachment means may be arranged on the bottom side of the guide housing. In the top portion of the guide housing a graphical element may be arranged. The guide housing may have a removable flap or lid that may be released from the guide housing such that a user may place a graphic element, such as a photo, a graphically attractive element or the like in the guide housing. The top portion, such as the flap or lid may be transparent such that the user may see the graphic element during daily use.

The second attachment means may be positioned on one side (a first) of the magnetic guide element and the second magnetic guide element is adapted such that the mobile electronic device is positioned on the second side of the magnetic guide element, opposite to the first side. Particularly, the second attachment means is positioned on the first side of the guide housing and the second side of the guide housing is adapted such that the mobile electronic device is positioned on the second side of the guide housing opposite to the first side of the guide housing. The second side of the guide housing may be transparent, comprise a releasable flap or a releasable lid, as described above.

The magnetic guide element may be spaced apart from the coil housing approximately 2 cm to approximately 4.5 cm, preferably approximately 2.5 cm to approximately 3.5 cm. Thus, the mobile electronic device and the coil housing are spaced apart at least approximately 2 cm to at least approximately 3.5 cm, preferably at least approximately 2.5 cm to at least approximately 3.5 cm. Thus, the mobile electronic device and the coil housing of the inductive charger set are spaced apart significantly further as compared with the prior art.

The present invention also discloses a method of charging a mobile electronic device with an inductive charger set as described above, wherein the method comprises the step of mounting a coil housing on a first side of a furniture element. The method also comprises the step of mounting a magnetic guide element on a second side of the furniture element opposite to the first side of the furniture element. The mobile electronic device is placed above the magnetic guide element. The furniture element may be a table, a bar table, a board of a bedside table or the like. The first side may be a side not visible to a user of the furniture element during daily use and the second side may be a side visible to the user of the furniture element during daily use.

The step of mounting the coil housing on the first side of a furniture element and the step of mounting the magnetic guide element on the second side of the furniture element are performed without removing material from the furniture element. Particularly, no material is removed by drilling, machining or the like from the first furniture element.

The step of mounting the coil housing on the first side of a furniture element and the step of mounting the magnetic guide element on the second side of the furniture element are performed such that the at least one coil accommodated in the coil housing defines a first surface that is covered by the at least one coil. The central axis of the at least one coil impinges perpendicular on the first surface. The first surface is congruent to a second surface defined by the portion of the magnetic guide element located around an opening in the magnetic guide element.

The method may be complimented by the features described above with respect to the inductive charger set.

### Short Description of the Drawings

The invention is now explained in further detail with reference to the accompanying drawings showing exemplary and non-limiting embodiments of the present invention, wherein
Figure 1 shows a schematic sectional view of one embodiment of the present invention; and
Figure 2 shows a exploded perspective view of one embodiment of the present invention.

### Detailed Description of the Drawings

The drawings are now described in detail, wherein positional relationships only serve the purpose of describing the invention and it is not intended that positional relationships are limiting the scope of the claims. Drawings are not drawn to scale, but only show functional relationships between the components.

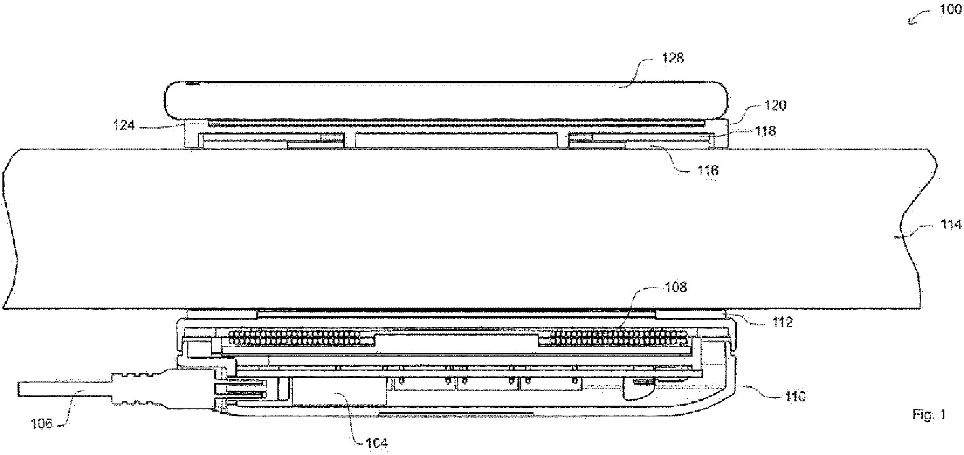

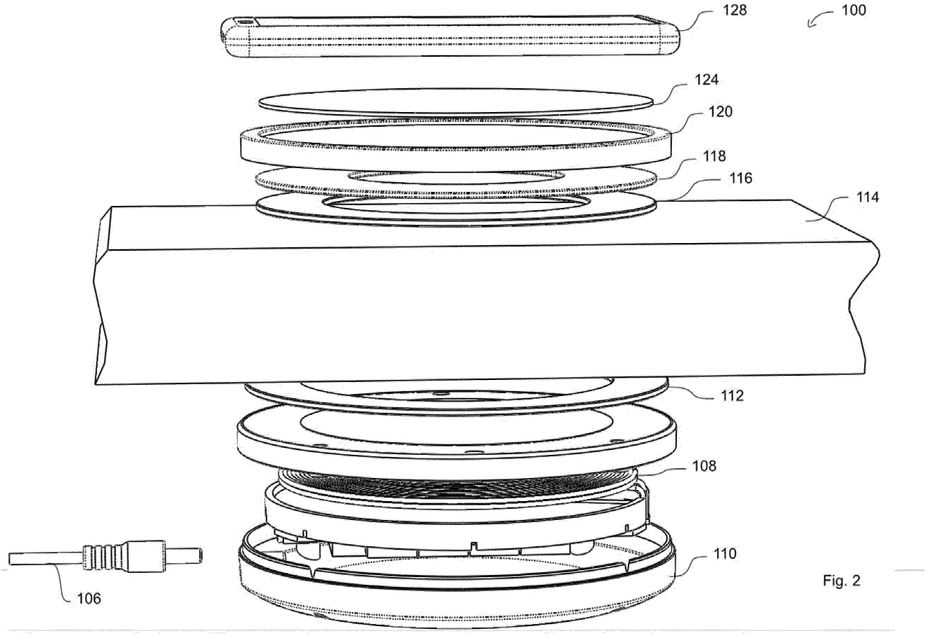

Reference is made to figures 1 and 2, wherein figure 1 is a sectional view and figure 2 is a perspective and partially exploded view of an inductive charger set 100 according to the present invention.

A coil housing 110 comprising a coil 108 with a plurality of windings and a controller 104 is mounted by an adhesive film 112 on a first side of a furniture 114. The controller 104 is connected by a cable 106 with a power supply (not shown). The controller 104 supplies the windings of the coil 108 with alternating current. The coil 108 emits an alternating magnetic field essentially in axial direction of the coil 108.

The controller 104 comprises several functionalities known from inductive charging devices of the prior art, such as a foreign object detection. If the controller 104 determines that an object different from a personal electronic device to be charged is positioned over the coil 108, supply of current to the coil 108 is interrupted. The controller 104 also implements an over temperature protection, an overvoltage protection, a short circuit protection, an overcurrent protection and an overheat protection. If the controller 104 determines that the temperature, the voltage, the current, or the like is not within a predetermined range, the controller 104 will interrupt power supply to the coil 108.

In one embodiment the controller 104 may implement an inductive charging compatible with the Qi standard.

The furniture element 114 may have a thickness ranging from 2.5 cm to 3.5 cm. The furniture element 114 may be part of a table, part of a bar table, part of a bedside table, part of a shelf or the like. The furniture element 114 may be made of timber, laminate, corian, particle board, granite or other hard stone, glass, etc.

On the second side of the furniture element 114 opposite to the first side of the furniture element 114 a guide housing 120 comprising a magnetic guide element 118 is arranged. The guide housing 120 is adhered or glued by a second adhesive film 116 to the furniture element 114. Alternatively or additionally, the guide housing 120 may be screwed by two screws to the furniture element 114. The guide housing 120 comprises a cover layer 122 for covering the magnetic guide element. The guide housing 120 further comprises a transparent lid 124, on which a graphic information may be printed. Further, an element comprising graphic information may be placed between the lid 124 and the cover layer 122. Alternatively, graphic information may be printed on the cover layer 122. The graphic information may be a photo, a logo or any other graphical designed element.

The magnetic guide element 118 is generally donut shaped with a circular opening in the middle portion. The magnetic guide element 118 may be formed by a ferrite, particularly by a soft magnetic ferrite. In one embodiment the soft magnetic ferrite of the magnetic guide element 118 may comprise Mn and Zn.

Particularly, the area between the opening in the central portion and the outer perimeter of the magnetic guide element is positioned above an area covered by the windings of the coil 108. The inventors assume, without wishing to be bound to a specific theory that the magnetic flux emitted by the coil 108 of the coil housing passes through the region between the opening and the outer perimeter of the magnetic guide element 118 and directs the magnetic flux to a mobile electronic device 128 positioned on the guide housing 120.

The present invention provides an inductive charger set allowing a significant larger distance between the mobile electronic device 128 and the coil 108 of the recharging device as compared to the prior art. This provides the advantage that no through hole or blind hole has to be machined into elements of furniture.

## Claims

1. Inductive charger set for charging a mobile electronic device, comprising:
- at least one coil accommodated in a coil housing, wherein the coil emits a magnetic field; and
- a magnetic guide element spaced apart from the coil housing, wherein the magnetic guide element is arranged between the coil housing and the mobile electronic device and wherein the magnetic guide element directs the magnetic field to the mobile electronic device;
- wherein the coil housing comprises first attachment means for fixing the coil housing on a first side of a furniture element; and
- wherein the magnetic guide element comprises second attachment means for fixing the magnetic guide element on a second side of the furniture element, wherein the first side is opposite to the second side.

2. Inductive charger set according to claim 1, wherein the coil housing is adapted to be arranged in use under the furniture element and the magnetic guide element is adapted to be arranged above the furniture element.

3. Inductive charger set according to claim 1 or 2, wherein the magnetic guide element is:
- generally donut shaped and comprises an opening;
- generally rectangular shaped and comprises an opening in the middle portion;
- generally arbitrarily shaped and comprises an opening.

4. Inductive charger set according to claim 3, wherein the at least one coil accommodated in the coil housing defines a first surface that is covered by the at least one coil, wherein the central axis of the at least one coil impinges perpendicular on the first surface, wherein the first surface is congruent to a second surface defined by the portion of the magnetic guide element located around the opening.

5. Inductive charger set according to any one of claims 1 to 4, wherein the magnetic guide element comprises ferrite.

6. Inductive charger set according to claim 5, wherein the magnetic guide element comprises a ring of ferrite and/or donut of ferrite.

7. Inductive charger set according to claim 4 or 5, wherein the magnetic guide element comprises a magnetic soft ferrite.

8. Inductive charger set according to any one of claims 1 to 7, wherein the first attachment means and/or the second attachment means comprise an adhesive film.

9. Inductive charger set according to any one of claims 1 to 8, wherein the magnetic guide element accommodated in a guide housing and the second attachment means is arranged on the guide housing.

10. Inductive charger set according to any one of claims 1 to 9, wherein the second attachment means is positioned on a first side of the magnetic guide element and the second side of the magnetic guide element is adapted that the mobile electronic device is positioned on the second side of the magnetic guide element opposite to the first side of the guide element.

11. Inductive charger set according to any one of claims 1 to 10, wherein the magnetic guide element is spaced apart from the coil housing approximately 2 cm to approximately 3.5 cm, preferably approximately 2.5 cm to approximately 3.5 cm.

12. Method of charging a mobile electronic device, with an inductive charger set according to any one of claims 1 to 11, comprising the following steps:
- mounting the coil housing on a first side of a furniture element;
- mounting the magnetic guide element on a second side of the furniture element opposite to the first side; and
- placing the mobile electronic device above the magnetic guide element.

13. Method according to claim 12, wherein the step of mounting the coil housing on the first side of a furniture element and the step of mounting the magnetic guide element on the second side of a furniture element are performed without removing material from the furniture element.

14. Method according to claim 12 or 13, wherein the step of mounting the coil housing on the first side of a furniture element and the step of mounting the magnetic guide element on the second side of the furniture element are performed such that the at least one coil accommodated in the coil housing defines a first surface that is covered by the at least one coil, wherein the central axis of the at least one coil impinges perpendicular on the first surface, wherein the first surface is congruent to a second surface defined by the portion of the magnetic guide element located around an opening in the magnetic guide element.
